# FASCICULE DE BREVET EUROPEEN

(11) **EP 2 271 484 B1**
(45) Date de publication et mention de la délivrance du brevet: **14.12.2011**
(21) Numéro de dépôt: 09721979.4
(22) Date de dépôt: 04.03.2009
(51) Int. Cl.: B31F 5/02, B32B 29/06, D21H 27/40

(54) **FEUILLE GAUFRÉE COMPORTANT UN PLI EN MATÉRIAU HYDROSOLUBLE ET PROCÉDÉ DE RÉALISATION D'UNE TELLE FEUILLE**
GEPRÄGTES FLÄCHENMATERIAL MIT EINER SCHICHT AUS WASSERLÖSLICHEM MATERIAL SOWIE VERFAHREN ZUR HERSTELLUNG EINES SOLCHEN BLECHS
EMBOSSED SHEET COMPRISING A PLY OF WATER-SOLUBLE MATERIAL AND METHOD FOR MANUFACTURING SUCH A SHEET

(30) Priorité: 06.03.2008 FR 0851455
(43) Date de publication de la demande: 12.01.2011
(73) Titulaire: Georgia-Pacific France, 92270 Bois-Colombes (FR)
(72) Inventeur: DENIS, Yoann, F-67600 Selestat (FR); PFISTER, Hubert, F-68590 Rorschwihr (FR)
(74) Mandataire: Cortier, Sophie
(86) Numéro de dépôt international: PCT/FR2009/000231
(87) Numéro de publication internationale: WO 2009/115705

(56) Documents cités:
- EP-A- 0 436 170
- WO-A-00/15907
- FR-A- 2 075 452
- FR-A- 2 321 389
- US-A1- 2007 062 658
- US-B1- 6 207 734

## Description

L'invention propose une feuille gaufrée comportant au moins un pli de cellulose et au moins un pli de matériau hydrosoluble.

L'invention propose plus particulièrement une feuille gaufrée comprenant au moins un pli d'ouate de cellulose ayant un motif de gaufrage comportant au moins - une série de protubérances formées en saillie sur une face dudit pli de ouate de cellulose, et au moins un pli de matériau hydrosoluble.

Le pli en matériau hydrosoluble est réalisé de manière à former une barrière étanche aux liquides, aux microorganismes tels que bactéries et virus contenus dans ces liquides.

La fonction dite "étanche" de la barrière formée par le pli hydrosoluble, consiste ici à empêcher temporairement les liquides de passer à travers ledit pli.

Ainsi, l'utilisation d'un pli de matériau hydrosoluble, en combinaison avec au moins un pli de ouate de cellulose permet d'obtenir un produit comportant d'une part les propriétés absorbantes du pli en ouate de cellulose et d'autre part la non perméabilité procurée par le pli en matériau hydrosoluble.

Ces propriétés sont particulièrement avantageuses lors d'une utilisation du produit papetier comme mouchoir ou comme papier toilette car les bactéries et/ou virus ne peuvent pas être transférées sur la main de l'utilisateur.

Par ailleurs, lorsque le produit papetier est utilisé comme papier toilette, chacun des différents plis constituant le produit papetier est apte à se disperser dans l'eau, lorsque le produit est jeté dans les toilettes, sans risquer d'obstruer les canalisations.

Le document GB-B-1.185.227 décrit un tel produit papetier, pour lequel le pli en matériau hydrosoluble est réalisé par extrusion à chaud et est lié à chaud aux plis de ouate de cellulose en sortie de l'extrudeuse, de sorte que les plis de ouate de cellulose absorbent en partie le matériau hydrosoluble qui n'est pas encore durci.

Cependant, un tel procédé de réalisation est relativement complexe à mettre en place, et ce document ne décrit pas quelle est la liaison entre le pli en matériau hydrosoluble avec chaque pli de ouate de cellulose.

L'invention a pour but de proposer un produit papetier comportant un pli en matériau hydrosoluble qui est lié à au moins un pli en ouate de cellulose de manière que le produit possède des propriétés usuelles d'un tel produit papetier.

Dans ce but, l'invention propose une feuille gaufrée du type décrite précédemment, caractérisée en ce que le pli de matériau hydrosoluble est lié audit au moins un pli d'ouate de cellulose au niveau des sommets d'au moins une partie des protubérances.

Selon d'autres caractéristiques de la feuille selon l'invention, prises isolément ou en combinaison:
- le pli de matériau hydrosoluble est lié audit au moins un pli d'ouate de cellulose par dissolution localement du pli de matériau hydrosoluble, au niveau desdits sommets de la dite au moins une partie des protubérances, auxquels le pli de matériau hydrosoluble est lié ;
- la surface du pli de matériau hydrosoluble est apte à être dissoute pour la liaison du pli de matériau hydrosoluble avec ledit au moins un pli d'ouate de cellulose ;
- le pli de matériau hydrosoluble est apte à être dissous localement par un liquide à base d'eau ;
- le liquide comporte de l'eau et un additif;
- le liquide est de l'eau ;
- chacun desdits sommets de la dite au moins une partie des protubérances est apte à être humidifié avant la liaison du pli d'ouate de cellulose avec le pli de matériau hydrosoluble, pour provoquer la dissolution partielle du pli de matériau hydrosoluble au contact avec ledit sommet de la dite au moins une partie des protubérances ;
- le pli de matériau hydrosoluble est lié audit au moins un pli d'ouate de cellulose par collage du matériau hydrosoluble auxdits sommets de la dite au moins une partie des protubérances ;
- la feuille comporte au moins deux plis d'ouate de cellulose ayant chacun un motif de gaufrage qui comporte au moins une série de protubérances orientées vers l'intérieur de la feuille, et le pli de matériau hydrosoluble est agencé entre lesdits au moins deux plis d'ouate de cellulose et est lié à chacun desdits deux plis au niveau des sommets d'au moins une partie des protubérances de chacun desdits deux plis d'ouate de cellulose ;
- le pli en matériau hydrosoluble est à base d'un alcool polyvinylique hydrolysé au moins en partie ;
- le pli en matériau hydrosoluble est à base d'un alcool polyvinylique hydrolysé à au moins 90% ;
- l'épaisseur du pli en matériau hydrosoluble est inférieure à 25µm ;
- le pli en matériau hydrosoluble est gaufré et comporte au moins une série de protubérances ;
- le pli en matériau hydrosoluble comporte des perforations et/ou des micro perforations.

L'invention a aussi pour but de proposer un procédé de fabrication d'une feuille gaufrée selon l'invention, comportant au moins un pli de ouate de cellulose et au moins un pli de matériau hydrosoluble, caractérisé en ce qu'il consiste à gaufrer au moins un pli de ouate de cellulose pour former des protubérances sur une face dudit au moins un pli de ouate de cellulose puis à lier le pli de matériau hydrosoluble aux sommets d'au moins une partie des protubérances dudit au moins un pli de ouate de cellulose.

Selon d'autres caractéristiques du procédé, prises isolément ou en combinaison :
- les sommets des protubérances de ladite au moins une partie des protubérances sont enduits de colle avant la liaison du pli de matériau hydrosoluble audit au moins un pli de ouate de cellulose ;
- les sommets des protubérances de ladite au moins une partie des protubérances sont humidifiés avant la liaison du pli de matériau hydrosoluble aux sommets des protubérances pour provoquer localement une dissolution de la surface du pli de matériau hydrosoluble lors de son contact avec les sommets humidifiés ;
- la face du pli de matériau hydrosoluble située en vis-à-vis du pli de ouate de cellulose est humidifiée localement avant la liaison du pli de matériau hydrosoluble audit au moins un pli de ouate de cellulose ;
- ladite face du pli de matériau hydrosoluble est humidifiée au niveau des sommets des protubérances dudit au moins un pli de ouate de cellulose ;
- le pli de matériau hydrosoluble est gaufré avant sa liaison avec ledit au moins un pli de ouate de cellulose ;
- le pli de matériau hydrosoluble comporte des perforations et/ou des micro perforations qui sont réalisées avant le gaufrage du pli de matériau hydrosoluble ;
- le procédé permet la réalisation d'une feuille qui comporte au moins un premier et au moins un deuxième pli de ouate de cellulose entre lesquels le pli de matériau hydrosoluble est agencé, et le pli de matériau hydrosoluble est lié simultanément audit au moins un premier pli de ouate de cellulose et audit au moins un deuxième pli de ouate de cellulose lors d'une opération de mariage des plis.

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique d'une feuille gaufrée selon l'invention comportant deux plis en ouate de cellulose et un pli intermédiaire en matériau hydrosoluble ;
- la figure 2 est une section de la feuille représentée à la figure 1, montrant les protubérances des plis ;
- la figure 3 est une section d'une feuille comportant un seul pli en ouate de cellulose et un pli en matériau hydrosoluble ;
- la figure 4 est une section similaire à celle de la figure 2, montrant une variante de réalisation de l'invention pour laquelle le pli en matériau hydrosoluble comporte des protubérances ;
- la figure 5 est une représentation schématique d'une installation pour réaliser une feuille gaufrée selon l'invention telle que représentée à la figure 3.

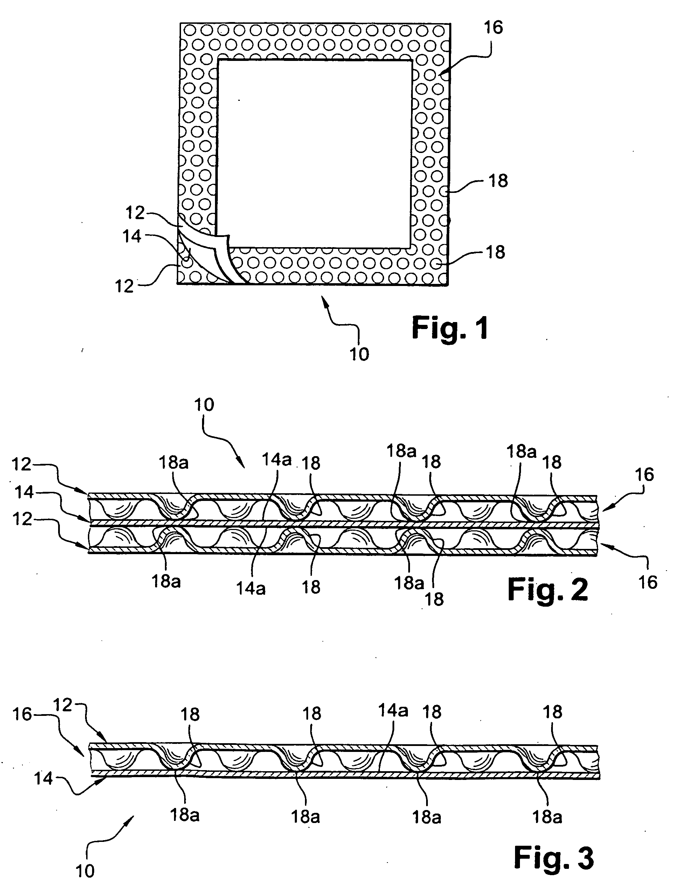

On a représenté aux figures 1, 2 et 3 un produit papetier 10 tel qu'une feuille gaufrée composée de plusieurs plis 12, 14 superposés.

La feuille 10 est par exemple une feuille de papier toilette ou un mouchoir jetable.

Dans un premier mode de réalisation représenté aux figures 1 et 2, la feuille 10 comporte deux plis 12 en ouate de cellulose et un pli 14 réalisé en matériau hydrosoluble agencé entre les deux plis 12 en ouate de cellulose.

Dans un deuxième mode de réalisation représenté à la figure 3, la feuille 10 comporte un pli 12 en ouate de cellulose et un pli 14 réalisé en matériau hydrosoluble.

Il sera compris que l'invention n'est pas limitée à ces modes de réalisation de la feuille gaufrée 10, qui peut comporter un plus grand nombre de plis 12 en ouate de cellulose et/ou un plus grand nombre de plis 14 en matériau hydrosoluble.

Par ailleurs, un pli 12 en ouate de cellulose peut comporter un groupe de plis liés entre eux de façon à se comporter comme un seul pli.

Chaque pli 12 en ouate de cellulose est réalisé de manière conventionnelle, par exemple par pressage humide conventionnel, dit CWP, et son grammage est adapté à l'utilisation de la feuille, par exemple le grammage du pli 12 en ouate de cellulose est compris entre 12 et 30 g/m².

Le pli 14 de matériau hydrosoluble est réalisé à partir d'un matériau apte à se dissoudre après un contact prolongé avec de l'eau. Il consiste en un matériau plastique, de préférence un alcool polyvinylique (PVA) qui est un acétate polyvinyle (PVAc), qui a été hydrolysé pour devenir soluble dans l'eau.

Une modification du taux d'hydrolyse du pli 14 en matériau hydrosoluble permet de modifier le temps nécessaire à la dissolution du pli 14 en matériau hydrosoluble. Ainsi, il est possible d'ajuster ce taux d'hydrolyse en fonction des propriétés souhaitées de la feuille 10.

De préférence, le taux d'hydrolyse du matériau plastique est supérieur à quatre vingt dix pour cent (90%).

Une autre propriété du matériau hydrosoluble utilisé pour former le pli 14 consiste en outre en ce que ce matériau est non poreux et il est apte à former une barrière étanche aux liquides, avant sa dissolution.

Ainsi, les liquides et microorganismes tels que bactéries et/ou virus appliqués sur une face de la feuille 10 ne peuvent être transférés à l'autre face de la feuille qui est par exemple en contact avec la main de l'utilisateur, ce qui permet d'assurer une utilisation hygiénique de la feuille 10, notamment lorsque la feuille 10 est utilisée comme mouchoir ou comme papier toilette, comme mentionné précédemment.

L'épaisseur du pli 14 en matériau hydrosoluble est de préférence inférieure à 25µm.

Enfin, selon une variante de réalisation de la feuille gaufrée 10, le pli 14 en matériau hydrosoluble comporte des perforations et/ou des micro perforations.

Ces perforations et/ou micro perforations permettent notamment d'accroître la vitesse d'absorption de la feuille 10 et d'améliorer sa souplesse.

La feuille 10 est une feuille gaufrée, c'est-à-dire que au moins l'un des plis 12, 14 comporte au moins un motif de gaufrage.

Selon une définition usuelle, le gaufrage est une opération mécanique de déformation qui modifie le relief d'une feuille.

Selon les modes de réalisation représentés aux figures 1 à 3, chaque pli 12 en ouate de cellulose comporte un motif de gaufrage 16 qui s'étend sur une partie de la surface du pli 12 et qui est composé de plusieurs protubérances 18 orientées vers l'intérieur de la feuille 10.

De plus, selon ces modes de réalisation, le pli 14 en matériau hydrosoluble est plan, c'est-à-dire qu'il ne comporte aucun motif de gaufrage.

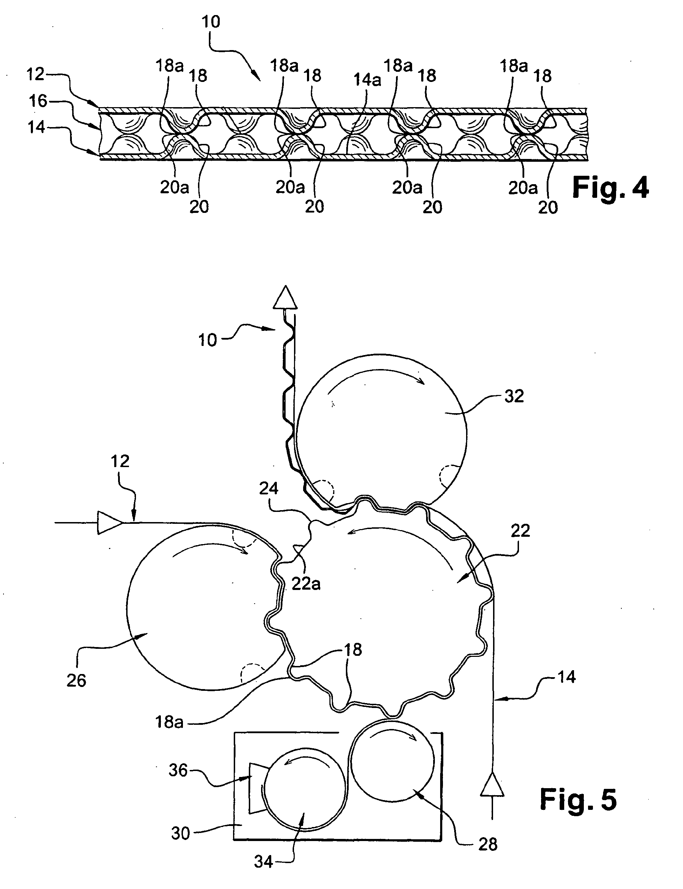

Selon le mode de réalisation représenté à la figure 4, le pli 12 en ouate de cellulose et le pli 14 en matériau hydrosoluble comportent chacun un motif de gaufrage composé de plusieurs protubérances 18, 20.

Ici, chaque pli 12, 14 comporte un seul motif de gaufrage et le relief des protubérances induites par le gaufrage est identique pour les deux plis 12, 14. Selon une variante de réalisation, au moins un pli 12, 14 comporte plusieurs motifs de gaufrage 16, formant par exemple un motif de fond et un motif principal.

La hauteur et la densité des protubérances 18, 20 d'un motif 16 peut être différente de la hauteur des protubérances 18, 20 de l'autre motif 16, ce qui permet de procurer à la feuille 10 des propriétés de douceur, d'absorption et de souplesse voulues.

De plus, ici, les plis 12, 14 sont assemblés par un mode d'assemblage connu sous la désignation pointes/pointes, c'est-à-dire de manière à faire coïncider les sommets 18a, 20a des protubérances de chacun des plis 12, 14.

Selon une variante de réalisation non représentée, les plis 12, 14 peuvent être assemblés selon la technique dite "nested", pour laquelle les protubérances sont imbriquées.

Conformément à l'invention, chaque pli 12 en ouate de cellulose est relié au pli 14 en matériau hydrosoluble au niveau des sommets 18a d'au moins une partie des protubérances 18.

Selon un premier mode de réalisation de l'invention, la liaison de chaque pli 12 en ouate de cellulose avec le pli 14 en matériau hydrosoluble est réalisé par collage de tout ou partie des sommets 18a des protubérances 18 de chaque pli 12 en ouate de cellulose sur la face 14a en vis-à-vis du pli 14 en matériau hydrosoluble.

De préférence, le collage s'effectue en déposant de la colle sur tout ou partie des sommets 18a des protubérances 18 avant que les plis 12, 14 ne soient mis en contact l'un avec l'autre.

Selon un mode de réalisation préféré de l'invention, la liaison de chaque pli 12 en ouate de cellulose avec le pli 14 en matériau hydrosoluble est réalisé par dissolution partielle du pli 14 en matériau hydrosoluble, au niveau des sommets 18a des protubérances 18.

La dissolution partielle du pli 14 en matériau hydrosoluble est obtenue en appliquant localement un liquide à base d'eau sur le pli 14 en matériau hydrosoluble.

Le matériau hydrosoluble présente la cohésion, ou le comportement, d'un solide lorsqu'il est déshydraté, et la cohésion d'un liquide visqueux lorsqu'il est hydraté, c'est-à-dire lorsqu'il est mélangé à de l'eau.

Lorsque le sommet 18a d'une protubérance du pli 12 en ouate de cellulose est en contact avec la zone partiellement dissoute du pli 14 en matériau hydrosoluble, le sommet 18a absorbe une partie du matériau hydrosoluble dissous. La ouate de cellulose et le matériau hydrosoluble se mélangent alors.

Ensuite, les deux plis sont liés ensemble par pressage puis par déshydratation naturelle ou forcée de manière que les zones de contact entre les plis 12, 14 deviennent des zones de liaison entre lesdits plis suite à la cohésion ainsi créée.

Selon un premier mode de réalisation, le produit utilisé pour provoquer la dissolution partielle du matériau hydrosoluble, est uniquement de l'eau de sorte que le pli 12 en ouate de cellulose est lié au pli 14 en matériau hydrosoluble uniquement par la quantité de matériau hydrosoluble qui a été dissoute.

Selon une variante de réalisation, le produit utilisé pour provoquer la dissolution partielle du matériau hydrosoluble consiste en un mélange d'eau et d'un additif tel que de la colle, qui permet d'améliorer la liaison du pli 12 en ouate de cellulose au pli 14 en matériau hydrosoluble.

Par ailleurs, la quantité de liquide utilisée pour provoquer une dissolution locale du pli 14 en matériau hydrosoluble, est déterminée de façon à ce que seule la surface externe du pli 14 en matériau hydrosoluble soit dissoute, c'est-à-dire qu'une portion centrale, au niveau de l'épaisseur du pli 14 en matériau hydrosoluble n'est pas dissoute. Cela permet notamment de conserver la fonction d'étanchéité du pli 14 en matériau hydrosoluble sur toute sa surface.

Une telle caractéristique de dissolution du pli 14 en matériau hydrosoluble uniquement en surface est de préférence obtenue en humidifiant au préalable les sommets 18a des protubérances 18, de manière que la quantité de liquide qui vient dissoudre le pli 14 en matériau hydrosoluble est limitée, et la dissolution se produit lorsque chaque pli 12 en ouate de cellulose est mis au contact avec le pli 14 en matériau hydrosoluble.

Le pli 14 en matériau hydrosoluble est ainsi mis en contact avec le liquide de liaison pendant une période de temps limitée.

Lorsque le pli 14 en matériau hydrosoluble est agencé entre deux plis 12 en ouate de cellulose, comme représenté aux figures 1 et 2, chaque face du pli 14 en matériau hydrosoluble est liée à un pli 12 en ouate de cellulose selon l'invention, c'est-à-dire que le pli 14 en matériau hydrosoluble est lié à des sommets 18a de protubérances 18 d'un pli 12 en ouate de cellulose, qui s'étend vers l'intérieur de la feuille 10, en direction du pli 14 en matériau hydrosoluble.

Par contre, lorsque le pli 14 en matériau hydrosoluble est lié à un seul pli 12 en ouate de cellulose, comme représenté aux figures 3 et 4, seule une face du pli 14 en matériau hydrosoluble est liée au pli 12 en ouate de cellulose selon l'invention, c'est-à-dire que la face du pli 14 en matériau hydrosoluble située en vis a vis du pli 12 en ouate de cellulose est liée aux sommets 18a de tout ou partie des protubérances 18 dudit pli 12 en ouate de cellulose.

On a représenté à la figure 5 une installation pour produire une feuille conformément à l'invention.

Cette installation est ici réalisée de manière à produire une feuille 10 comprenant un seul pli 12 en ouate de cellulose qui est gaufré et comprenant un pli 14 en matériau hydrosoluble qui est plan, comme représenté à la figure 4.

L'installation comporte un cylindre gravé de gaufrage 22 dont la surface externe cylindrique convexe 22a comporte une série de picots 24 formés en relief et dont la forme ou profil externe est homologue de celle que l'on désire obtenir pour chaque protubérance 18 correspondante du pli 12 en ouate de cellulose.

De manière connue, le pli 12 en ouate de cellulose passe tout d'abord entre le premier cylindre gravé 22 et un cylindre associé 26 pour la réalisation du motif de gaufrage de ce pli 12. Le cylindre associé 26 peut être à revêtement caoutchouc ou similaire, ou bien éventuellement à revêtement rigide de dureté inférieure à la dureté du cylindre gravé 22.

Le pli 12 en ouate de cellulose passe ensuite devant un cylindre applicateur 28 appartenant à une unité 30 d'enduction, de conception connue, qui dépose un produit liant sur les sommets 18a des protubérances 18.

L'unité 30 d'enduction permet de déposer le produit liant sur tous les sommets 18a des protubérances 18, ou sur seulement une partie des sommets 18a des protubérances 18, notamment sur les sommets 18a des protubérances 18 les plus élevés lorsque le pli 12 en ouate de cellulose comporte plusieurs motifs de gaufrage 16 de hauteurs différentes.

Selon l'invention, et comme décrit précédemment, le produit liant peut être de la colle, de l'eau ou un mélange d'eau avec un liant, et sera désigné par la suite par l'appellation produit liant.

L'installation 30 d'enduction comporte de façon connue un cylindre gravé 34, communément appelé "anilox" dont la face cylindrique comporte des cavités (non représentées) qui sont aptes à se remplir de produit liant, lors de leur passage devant un réservoir 36 pour transférer ensuite, le produit liant sur le cylindre applicateur 28.

L'anilox 34 permet de transférer de manière définie et contrôlée le produit liant sur le cylindre applicateur 28. Ceci permet de limiter la quantité de produit liant en mouvement.

Les cavités de l'anilox 34 sont de préférence de manière qu'elles aient un volume compris entre 3 et 40 cm³/m².

Le pli 14 en matériau hydrosoluble est ensuite mis en contact avec le pli 12 en ouate de cellulose.

Puis, les deux plis 12 et 14 passent dans un "nip" entre le cylindre de gaufrage 22 et un cylindre 32, dit cylindre marieur, pour assurer l'association des plis 12, 14 par la pression du cylindre marieur 32 sur le cylindre de gaufrage 22.

Ainsi, le procédé, pour la réalisation d'une feuille gaufrée 10 conforme à l'invention par l'intermédiaire de cette installation comporte une première étape de gaufrage du pli 12 en ouate de cellulose, pour réaliser au moins un motif de gaufrage 16 constitué de protubérances 18 sur une face dudit pli 12.

Cette étape de gaufrage est mise en oeuvre par la coopération du cylindre gravé 22 avec le cylindre associé 26.

Ce procédé comporte aussi une étape de liaison du pli 12 en ouate de cellulose au pli 14 en matériau hydrosoluble, ici par coopération du cylindre gravé 22 avec le cylindre marieur 32.

Selon l'invention, l'étape de gaufrage du pli 12 en ouate de cellulose est mise en oeuvre avant l'étape de liaison du pli 12 en ouate de cellulose au pli 14 en matériau hydrosoluble. De plus, encore selon l'invention, l'étape de liaison consiste à lier le pli 12 en ouate de cellulose au pli 14 en matériau hydrosoluble au niveau des sommets 18a des protubérances 18.

Pour cela, l'installation 30 d'enduction dépose le produit liant avant la liaison du pli 12 en ouate de cellulose au pli 14 en matériau hydrosoluble.

Ainsi, lorsque le produit liant est à base d'eau, le pli 14 en matériau hydrosoluble n'est dissout localement que lorsqu'il est mis en contact avec le pli 12 en ouate de cellulose dont les sommets 18a des protubérances 18 ont été humidifiés.

Cela permet de limiter et de contrôler l'importance de la dissolution du pli 14 en matériau hydrosoluble, pour ne pas affaiblir ses propriétés de manière trop importante, notamment les propriétés d'étanchéité.

Selon une variante de réalisation du procédé selon l'invention, le produit liant est appliqué sur le pli 14 en matériau hydrosoluble, avant sa liaison avec le pli 12 en ouate de cellulose.

L'installation est alors modifiée en conséquence, c'est-à-dire que l'installation d'enduction 30 est agencée pour appliquer le produit de liaison directement sur le pli 14 en matériau hydrosoluble.

Lorsque le pli 14 en matériau hydrosoluble passe en regard du pli 12 en ouate de cellulose, celui-ci a été formé pour avoir les propriétés mentionnées précédemment, c'est-à-dire que le matériau a été hydrolysé en partie.

Par ailleurs, dans le cas où le pli 14 en matériau hydrosoluble comporte des perforations ou micro perforations, celles-ci sont généralement réalisées avant que le pli 14 en matériau hydrosoluble n'atteigne l'installation telle que décrite précédemment.

Préférentiellement, les micro-perforations au sens de l'invention présentent une densité inférieure à 150/cm² et leur diamètre est inférieur à 1 mm.

De plus, selon le mode de réalisation de la feuille gaufrée 10 selon lequel le pli 14 en matériau hydrosoluble est lui aussi gaufré, comme représenté à la figure 4, le gaufrage est réalisé avant qu'il ne vienne en contact avec le pli 12 en ouate de cellulose. L'installation comporte à cet effet une unité de gaufrage supplémentaire (non représentée).

Il en est de même pour réaliser la feuille gaufrée représentée à la figure 2, qui comporte deux plis 12 en ouate de cellulose entre lesquels le pli 14 en matériau hydrosoluble est agencé.

L'installation comporte alors un cylindre gravé 22 et une unité d'enduction 30 tels que décrits précédemment, associés à chaque pli 12 en ouate de cellulose.

Le pli 14 en matériau hydrosoluble est alors mis en regard de chacun des deux plis 12 en ouate de cellulose, pour qu'il soit agencé entre ceux-ci.

Ensuite, l'ensemble des plis 12, 14 passent simultanément devant le cylindre marieur 32 afin d'associer le pli 14 en matériau hydrosoluble simultanément aux deux plis 12 en ouate de cellulose.

Ainsi, la feuille gaufrée selon l'invention procure une meilleure protection temporaire vis-à-vis d'une feuille dite "classique", c'est-à-dire qui ne comporte pas de pli en matériau hydrosoluble, et conserve des caractéristiques de délitage classiques après utilisation, c'est-à-dire lorsqu'elle est jetée dans des canalisations d'évacuation des sanitaires.

Le tableau comparatif ci-après est le résultat de différentes mesures entre une feuille multiplis, pour une utilisation en tant que papier toilette, dont la conception est dite "classique", et qui comporte trois plis d'ouate de cellulose, et d'une feuille multiplis selon l'invention.

Plus précisément, la feuille multiplis dénommée "papier trois plis classique" dans le tableau comprend deux plis externes de type CWP et un pli central ayant une résistance mécanique supérieure à celle des deux plis externes.

La feuille multiplis dénommée "invention" dans le tableau est réalisée conformément à l'invention, et diffère de la feuille dénommée "papier trois plis classique" uniquement au niveau du pli central qui consiste ici en un pli en matériau hydrosoluble.

| | | **Papier toilette 3 plis classique** | **Invention** |
|---|---|---|---|
| **Epaisseur** | En l'état | 0.354 ± 0.006 | 0.524 ± 0.030 |
| (*mm*) | En 12 plis | 0.323 ± 0.003 | 0.491 ± 0.013 |
| **Absorption** | Capacité (g/g) | 9,3 | 11,8 |
| | Temps (s) | 4 | 5 |
| **Délitabilité** | (s) | 8 | 20 à 25 |
| **Résistances** | (N/m) | - | - |
| SM sec | | 199 ± 7 | > 899 |
| SM humide | | 4.7 ± 0.7** | 8.0 ± 1.1 (12.9 t 1.4)** |
| ST sec | | 81 ± 5 | 281 ± 10 |
| ST humide | | - | - |
| **Allongement SM** | % | 19 | 25 à 73 |

Il apparaît que tous les paramètres mesurés sont améliorés en particulier les résistances à l'état sec sens marche (SM), sens travers (ST) ainsi que la résistance humide sens marche (SM) sont améliorés. L'allongement en sens marche (SM) est aussi amélioré.

De plus, la fonction "délitabilité" du papier selon l'invention est avantageusement préservée.

## Revendications

1. Feuille (10) gaufrée comprenant au moins un pli (12) d'ouate de cellulose ayant un motif de gaufrage comportant au moins une série de protubérances (18) formées en saillie sur une face dudit pli (12) de ouate de cellulose, et comprenant au moins un pli (14) de matériau hydrosoluble,
**caractérisée en ce que** le pli (14) de matériau hydrosoluble est lié audit au moins un pli (12) d'ouate de cellulose au niveau des sommets (18a) d'au moins une partie des protubérances (18).

2. Feuille (10) selon la revendication précédente, **caractérisée en ce que** le pli (14) de matériau hydrosoluble est lié audit au moins un pli (12) d'ouate de cellulose par dissolution locale et partielle du pli (14) de matériau hydrosoluble, au niveau desdits sommets (18a) de la dite au moins une partie des protubérances (18), auxquels le pli (14) de matériau hydrosoluble est lié.

3. Feuille (10) selon la revendication précédente, **caractérisée en ce que** la surface du pli (14) de matériau hydrosoluble est apte à être dissoute pour la liaison du pli (14) de matériau hydrosoluble avec ledit au moins un pli (12) d'ouate de cellulose.

4. Feuille (10) selon la revendication 2 ou 3, **caractérisée en ce que** le pli (14) de matériau hydrosoluble est apte à être dissous localement par un liquide à base d'eau.

5. Feuille (10) selon la revendication précédente, **caractérisée en ce que** le liquide comporte de l'eau et un additif.

6. Feuille (10) selon la revendication 4, **caractérisée en ce que** le liquide est de l'eau.

7. Feuille (10) selon l'une quelconque des revendications 2 à 6, **caractérisée en ce que** chacun desdits sommets (18a) de la dite au moins une partie des protubérances (18) est apte à être humidifié avant la liaison du pli (12) d'ouate de cellulose avec le pli (14) de matériau hydrosoluble, pour provoquer la dissolution partielle du pli (14) de matériau hydrosoluble au contact avec ledit sommet de la dite au moins une partie des protubérances (18).

8. Feuille (10) selon la revendication 1, **caractérisée en ce que** le pli (14) de matériau hydrosoluble est lié audit au moins un pli (12) d'ouate de cellulose par collage du matériau hydrosoluble auxdits sommets (18a) de la dite au moins une partie des protubérances (18).

9. Feuille (10) selon l'une quelconque des revendications précédentes, **caractérisée en ce qu'**elle comporte au moins deux plis (12) d'ouate de cellulose ayant chacun un motif (16) de gaufrage qui comporte au moins une série de protubérances (18) orientées vers l'intérieur de la feuille et **en ce que** le pli (14) de matériau hydrosoluble est agencé entre lesdits au moins deux plis (12) d'ouate de cellulose et est lié à chacun desdits deux plis (12) au niveau des sommets (18a) d'au moins une partie des protubérances (18) de chacun desdits deux plis (12) d'ouate de cellulose.

10. Feuille (10) selon l'une quelconque des revendications précédentes, **caractérisée en ce que** le pli (14) en matériau hydrosoluble est à base d'un alcool polyvinylique hydrolysé au moins en partie.

11. Feuille (10) selon la revendication précédente, **caractérisée en ce que** le pli (14) en matériau hydrosoluble est à base d'un alcool polyvinylique hydrolysé à au moins 90%.

12. Feuille (10) selon l'une quelconque des revendications précédentes, **caractérisée en ce que** l'épaisseur du pli (14) en matériau hydrosoluble est inférieure à 25µm.

13. Feuille (10) selon l'une quelconque des revendications précédentes, **caractérisée en ce que** le pli (14) en matériau hydrosoluble est gaufré et comporte au moins une série de protubérances (18).

14. Feuille (10) selon l'une quelconque des revendications précédentes, **caractérisé en ce que** le pli (14) en matériau hydrosoluble comporte des perforations et/ou des micro perforations.

15. Procédé de fabrication d'une feuille (10) gaufrée selon l'une quelconque des revendications précédentes, comportant au moins un pli (12) de ouate de cellulose et au moins un pli (14) de matériau hydrosoluble,
**caractérisé en ce qu'**il consiste à gaufrer au moins un pli (12) de ouate de cellulose pour former des protubérances (18) sur une face dudit au moins un pli (12) de ouate de cellulose puis à lier le pli (14) de matériau hydrosoluble aux sommets (18a) d'au moins une partie des protubérances (18) dudit au moins un pli (12) de ouate de cellulose.

16. Procédé selon la revendication précédente, pour la réalisation d'une feuille (10) selon la revendication 8, **caractérisé en ce que** les sommets (18a) des protubérances (18) de ladite au moins une partie des protubérances (18) sont enduits de colle avant la liaison du pli (14) de matériau hydrosoluble audit au moins un pli (12) de ouate de cellulose.

17. Procédé selon la revendication 15, **caractérisé en ce que** les sommets (18a) des protubérances (18) de ladite au moins une partie des protubérances (18) sont humidifiés avant la liaison du pli (14) de matériau hydrosoluble aux sommets (18a) des protubérances (18) pour provoquer localement une dissolution de la surface du pli (14) de matériau hydrosoluble lors de son contact avec les sommets (18a) humidifiés.

18. Procédé selon la revendication 15, **caractérisé en ce que** la face du pli (14) de matériau hydrosoluble située en vis-à-vis du pli (12) de ouate de cellulose est humidifiée localement avant la liaison du pli (14) de matériau hydrosoluble audit au moins un pli (12) de ouate de cellulose.

19. Procédé selon la revendication précédente, **caractérisé en ce que** ladite face du pli (14) de matériau hydrosoluble est humidifiée au niveau des sommets (18a) des protubérances (18) dudit au moins un pli (12) de ouate de cellulose.

20. Procédé selon l'une quelconque des revendications 15 à 19, **caractérisé en ce que** le pli (14) de matériau hydrosoluble est gaufré avant sa liaison avec ledit au moins un pli (12) de ouate de cellulose.

21. Procédé selon la revendication précédente, pour la réalisation d'une feuille (10) selon la revendication 14, **caractérisé en ce que** le pli (14) de matériau hydrosoluble comporte des perforations et/ou des micro perforations qui sont réalisées avant le gaufrage du pli (14) de matériau hydrosoluble.

22. Procédé selon l'une quelconque des revendication 15 à 21, pour la réalisation d'une feuille (10) qui comporte au moins un premier et au moins un deuxième pli (12) de ouate de cellulose entre lesquels le pli (14) de matériau hydrosoluble est agencé,
**caractérisé en ce que** le pli (14) de matériau hydrosoluble est lié simultanément audit au moins un premier pli (12) de ouate de cellulose et audit au moins un deuxième pli (12) de ouate de cellulose lors d'une opération de mariage des plis.

## Claims

1. Embossed sheet (10) comprising at least one ply (12) of tissue having an embossing pattern comprising at least one series of protuberances (18) formed and projecting from one surface of the said ply (12) of tissue, and comprising at least one ply (14) of water-soluble material,
**characterized in that** the ply (14) of water-soluble material is joined to the said at least one ply (12) of tissue at the summits (18a) of at least part of the protuberances (18).

2. Sheet (10) according to the preceding claim, **characterized in that** the ply (14) of water-soluble material is joined to the said at least one ply (12) of tissue by local and partial dissolution of the ply (14) of water-soluble material, at the summits (18a) of the said at least part of the protuberances (18), to which the ply (14) of water-soluble material is joined.

3. Sheet (10) according to the preceding claim, **characterized in that** the surface of the ply (14) of water-soluble material is suitable for being dissolved for the joining of the ply (14) of water-soluble material to the said at least one ply (12) of tissue.

4. Sheet (10) according to either of Claims 2 and 3, **characterized in that** the ply (14) of water-soluble material is suitable for being dissolved locally by a water-based liquid.

5. Sheet (10) according to the preceding claim, **characterized in that** the liquid comprises water and an additive.

6. Sheet (10) according to Claim 4, **characterized in that** the liquid is water.

7. Sheet (10) according to any one of Claims 2 to 6, **characterized in that** each of the said summits (18a) of the said at least part of the protuberances (18) is suitable for being humidified before the joining of the ply (12) of tissue to the ply (14) of water-soluble material, to cause the partial dissolution of the ply (14) of water-soluble material at the contact with the said summit of the said at least part of the protuberances (18).

8. Sheet (10) according to Claim 1, **characterized in that** the ply (14) of water-soluble material is joined to the said at least one ply (12) of tissue by adhesion of the water-soluble material to the said summits (18a) of the said at least part of the protuberances (18).

9. Sheet (10) according to any one of the preceding claims, **characterized in that** it comprises at least two plies (12) of tissue each having an embossing pattern (16) which comprises at least one series of protuberances (18) oriented inwardly from the sheet and **in that** the ply (14) of water-soluble material is arranged between the said at least two plies (12) of tissue and is joined to each of the said two plies (12) at the summits (18a) of at least part of the protuberances (18) of each of the said two plies (12) of tissue.

10. Sheet (10) according to any one of the preceding claims, **characterized in that** the ply (14) of water-soluble material is based on an at least partially hydrolysed polyvinyl alcohol.

11. Sheet (10) according to the preceding claim, **characterized in that** the ply (14) of water-soluble material is based on an at least 90% hydrolysed polyvinyl alcohol.

12. Sheet (10) according to any one of the preceding claims, **characterized in that** the thickness of the ply (14) of water-soluble material is less than 25 µm.

13. Sheet (10) according to any one of the preceding claims, **characterized in that** the ply (14) of water-soluble material is embossed and comprises at least one series of protuberances (18).

14. Sheet (10) according to any one of the preceding claims, **characterized in that** the ply (14) of water-soluble material comprises perforations and/or micro-perforations.

15. Method for manufacturing an embossed sheet (10) according to any one of the preceding claims, comprising at least one ply (12) of tissue and at least one ply (14) of water-soluble material,
**characterized in that** it consists in embossing at least one ply (12) of tissue to form protuberances (18) on one surface of the said at least one ply (12) of tissue and then in joining the ply (14) of water-soluble material to the summits (18a) of at least part of the protuberances (18) of the said at least one ply (12) of tissue.

16. Method according to the preceding claim, for manufacturing a sheet (10) according to Claim 8, **characterized in that** the summits (18a) of the protuberances (18) of the said at least part of the protuberances (18) are coated with adhesive before the joining of the ply (14) of water-soluble material to the said at least one ply (12) of tissue.

17. Method according to Claim 15, **characterized in that** the summits (18a) of the protuberances (18) of the said at least part of the protuberances (18) are humidified before the joining of the ply (14) of water-soluble material to the summits (18a) of the protuberances (18) to cause a local dissolution of the surface of the ply (14) of water-soluble material upon its contact with the humidified summits (18a).

18. Method according to Claim 15, **characterized in that** the surface of the ply (14) of water-soluble material located opposite the ply (12) of tissue is humidified locally before the joining of the ply (14) of water-soluble material to the said at least one ply (12) of tissue.

19. Method according to the preceding claim, **characterized in that** the said surface of the ply (14) of water-soluble material is humidified at the summits (18a) of the protuberances (18) of the said at least one ply (12) of tissue.

20. Method according to any one of Claims 15 to 19, **characterized in that** the ply (14) of water-soluble material is embossed before its joining to the said at least one ply (12) of tissue.

21. Method according to the preceding claim, for manufacturing a sheet (10) according to Claim 14, **characterized in that** the ply (14) of water-soluble material comprises perforations and/or micro-perforations which are produced before the embossing of the ply (14) of water-soluble material.

22. Method according to any one of Claims 15 to 21, for manufacturing a sheet (10) which comprises at least one first and at least one second ply (12) of tissue between which the ply (14) of water-soluble material is arranged,
**characterized in that** the ply (14) of water-soluble material is joined simultaneously to the said at least one first ply (12) of tissue and to the said at least one second ply (12) of tissue during an operation for joining the plies.

## Patentansprüche

1. Geprägtes Papier (10), umfassend mindestens einen Falz (12) aus Zellstoffwatte mit einem Prägemotiv, enthaltend mindestens eine Reihe von Ausstülpungen (18), die auf einer Seite des Falzes (12) aus Zellstoffwatte vorstehend ausgebildet sind, und umfassend mindestens einen Falz (14) aus wasserlöslichem Material,
**dadurch gekennzeichnet, dass** der Falz (14) aus wasserlöslichem Material mit mindestens einem Falz (12) aus Zellstoffwatte im Bereich der Spitzen (18a) mindestens eines Teils der Ausstülpungen (18) verbunden ist.

2. Papier (10) nach dem vorhergehenden Anspruch, **dadurch gekennzeichnet, dass** der Falz (14) aus wasserlöslichem Material mit dem mindestens einen Falz (12) aus Zellstoffwatte durch lokale oder teilweise Auflösung des Falzes (14) aus wasserlöslichem Material im Bereich der Spitzen (18a) des mindestens einen Teils der Ausstülpungen (18) verbunden ist, mit denen der Falz (14) aus wasserlöslichem Material verbunden ist.

3. Papier (10) nach dem vorhergehenden Anspruch, **dadurch gekennzeichnet, dass** die Oberfläche des Falzes (14) aus wasserlöslichem Material für die Verbindung des Falzes (14) aus wasserlöslichem Material mit dem mindestens einen Falz (12) aus Zellstoffwatte aufgelöst werden kann.

4. Papier (10) nach Anspruch 2 oder 3, **dadurch gekennzeichnet, dass** der Falz (14) aus wasserlöslichem Material lokal durch eine Flüssigkeit auf Basis von Wasser aufgelöst werden kann.

5. Papier (10) nach dem vorhergehenden Anspruch, **dadurch gekennzeichnet, dass** die Flüssigkeit Wasser und einen Zusatzstoff enthält.

6. Papier (10) nach Anspruch 4, **dadurch gekennzeichnet, dass** die Flüssigkeit Wasser ist.

7. Papier (10) nach einem der Ansprüche 2 bis 6, **dadurch gekennzeichnet, dass** jede der Spitzen (18a) des mindestens einen Teils der Ausstülpungen (18) vor der Verbindung des Falzes (12) aus Zellstoffwatte mit dem Falz (14) aus wasserlöslichem Material befeuchtet werden kann, um die teilweise Auflösung des Falzes (14) aus wasserlöslichem Material, der mit der Spitze des mindestens einen Teils der Ausstülpungen (18) in Kontakt ist, hervorzurufen.

8. Papier (10) nach Anspruch 1, **dadurch gekennzeichnet, dass** der Falz (14) aus wasserlöslichem Material mit dem mindestens einen Falz (12) aus Zellstoffwatte durch Kleben des wasserlöslichen Materials auf die Spitzen (18a) des mindestens einen Teils der Ausstülpungen (18) verbunden wird.

9. Papier (10) nach einem der vorhergehenden Ansprüche, **dadurch gekennzeichnet, dass** es mindestens zwei Falze (12) aus Zellstoffwatte enthält, die jeweils ein Prägemotiv (16) aufweisen, das mindestens eine Reihe von Ausstülpungen (18) enthält, die zum Inneren des Papiers gerichtet sind, und dass der Falz (14) aus wasserlöslichem Material zwischen den mindestens zwei Falzen (12) aus Zellstoffwatte angeordnet und mit jedem der beiden Falze (12) im Bereich der Spitzen (18a) mindestens eines Teils der Ausstülpungen (18) jedes der beiden Falze (12) aus Zellstoffwatte verbunden ist.

10. Papier (10) nach einem der vorhergehenden Ansprüche, **dadurch gekennzeichnet, dass** der Falz (14) aus wasserlöslichem Material auf Basis von zumindest teilweise hydrolysiertem Polyvinylalkohol ist.

11. Papier (10) nach dem vorhergehenden Anspruch, **dadurch gekennzeichnet, dass** der Falz (14) aus wasserlöslichem Material auf Basis eines zu mindestens 90 % hydrolysierten Polyvinylalkohols ist.

12. Papier (10) nach einem der vorhergehenden Ansprüche, **dadurch gekennzeichnet, dass** die Dicke des Falzes (14) aus wasserlöslichem Material geringer als 25 µm ist.

13. Papier (10) nach einem der vorhergehenden Ansprüche, **dadurch gekennzeichnet, dass** der Falz (14) aus wasserlöslichem Material geprägt ist und mindestens eine Reihe von Ausstülpungen (18) enthält.

14. Papier (10) nach einem der vorhergehenden Ansprüche, **dadurch gekennzeichnet, dass** der Falz (14) aus wasserlöslichem Material Perforationen und/oder Mikroperforationen enthält.

15. Verfahren zur Herstellung eines geprägten Papiers (10) nach einem der vorhergehenden Ansprüche, enthaltend mindestens einen Falz (12) aus Zellstoffwatte und mindestens einen Falz (14) aus wasserlöslichem Material,
**dadurch gekennzeichnet, dass** es darin besteht, mindestens einen Falz (12) aus Zellstoffwatte zu prägen, um Ausstülpungen (18) auf einer Seite des mindestens einen Falzes (12) aus Zellstoffwatte zu bilden, dann den Falz (14) aus wasserlöslichem Material mit den Spitzen (18a) mindestens eines Teils der Ausstülpungen (18) des mindestens einen Falzes (12) aus Zellstoffwatte zu verbinden.

16. Verfahren nach dem vorhergehenden Anspruch zur Herstellung eines Papiers (10) nach Anspruch 8, **dadurch gekennzeichnet, dass** die Spitzen (18a) der Ausstülpungen (18) des mindestens einen Teils der Ausstülpungen (18) vor der Verbindung des Falzes (14) aus wasserlöslichem Material mit dem mindestens einen Falz (12) aus Zellstoffwatte mit Kleber eingestrichen werden.

17. Verfahren nach Anspruch 15, **dadurch gekennzeichnet, dass** die Spitzen (18a) der Ausstülpungen (18) des mindestens einen Teils der Ausstülpungen (18) vor der Verbindung des Falzes (14) aus wasserlöslichem Material mit den Spitzen (18a) der Ausstülpungen (18) befeuchtet werden, um lokal eine Auflösung der Oberfläche des Falzes (14) aus wasserlöslichem Material bei ihrem Kontakt mit den befeuchteten Spitzen (18a) hervorzurufen.

18. Verfahren nach Anspruch 15, **dadurch gekennzeichnet, dass** die Seite des Falzes (14) aus wasserlöslichem Material, die sich gegenüber dem Falz (12) aus Zellstoffwatte befindet, lokal vor der Verbindung des Falzes (14) aus wasserlöslichem Material mit dem mindestens einen Falz (12) aus Zellstoffwatte befeuchtet wird.

19. Verfahren nach dem vorhergehenden Anspruch, **dadurch gekennzeichnet, dass** die Seite des Falzes (14) aus wasserlöslichem Material im Bereich der Spitzen (18a) der Ausstülpungen (18) des mindestens einen Falzes (12) aus Zellstoffwatte befeuchtet wird.

20. Verfahren nach einem der Ansprüche 15 bis 19, **dadurch gekennzeichnet, dass** der Falz (14) aus wasserlöslichem Material vor seiner Verbindung mit dem mindestens einen Falz (12) aus Zellstoffwatte geprägt wird.

21. Verfahren nach dem vorhergehenden Anspruch zur Herstellung eines Papiers (10) nach Anspruch 14, **dadurch gekennzeichnet, dass** der Falz (14) aus wasserlöslichem Material Perforationen und/oder Mikroperforationen enthält, die vor dem Prägen des Falzes (14) aus wasserlöslichem Material hergestellt werden.

22. Verfahren nach einem der Ansprüche 15 bis 21 zur Herstellung eines Papiers (10), das mindestens einen ersten und mindestens einen zweiten Falz (12) aus Zellstoffwatte enthält, zwischen denen der Falz (14) aus wasserlöslichem Material angeordnet ist,
**dadurch gekennzeichnet, dass** der Falz (14) aus wasserlöslichem Material gleichzeitig mit dem mindestens einen ersten Falz (12) aus Zellstoffwatte und dem mindestens einen zweiten Falz (12) aus Zellstoffwatte während eines Schrittes der Verbindung der Falze verbunden wird.
